# EUROPEAN PATENT SPECIFICATION

(11) **EP 2 460 631 B1**
(45) Date of publication and mention of the grant of the patent: **14.12.2016**
(21) Application number: 09847747.4
(22) Date of filing: 27.07.2009
(51) Int. Cl.: B09C 1/00, B09C 1/08, B28B 7/16, C04B 26/02, C04B 26/10, B28B 1/08, B29C 67/24, C04B 111/82

(54) **METHOD FOR MANUFACTURING NON-FLAT AGGLOMERATED STONE PRODUCTS**
VERFAHREN ZUR HERSTELLUNG VON NICHT FLACHEN AGGLOMERIERTEN STEINPRODUKTEN
PROCÉDÉ POUR LA FABRICATION DE PRODUITS AGGLOMÉRÉS PIERREUX NON PLATS

(43) Date of publication of application: 06.06.2012
(73) Proprietor: COSENTINO, S.A., 04850 Cantoria Almeria (ES)
(72) Inventor: RAMÓN MORENO, José, Luis, E-04850 Cantoria (Almería) (ES); RODRÍGUEZ GARCÍA, Salvador, Cristóbal, E-04850 Cantoria (Almería) (ES); MEDINA JIMÉNEZ, Adrián, E-04850 Cantoria (Almería) (ES)
(74) Representative: Carpintero Lopez, Francisco
(86) International application number: PCT/ES2009/070314
(87) International publication number: WO 2011/012732

(56) References cited:
- EP-A2- 1 203 545
- WO-A1-00/43192
- WO-A1-00/50356
- WO-A1-2006/079585
- WO-A1-2006/079585
- WO-A2-2006/048350
- CN-A- 101 066 609
- DE-A1- 1 471 304
- DE-A1- 2 508 811
- DE-A1- 19 848 029
- ES-U- 197 634
- GB-A- 923 283
- GB-A- 2 233 640
- US-A- 1 562 519

## Description

### Field of the Invention

The present invention relates to the techniques used in the production of agglomerated products, and more particularly, it relates to a method for manufacturing non-flat agglomerated stone products by means of vacuum vibrocompression.

### Background of the Invention

It is well known in the state of the art how to manufacture agglomerates of stone aggregates and, in particular, quartz agglomerates in the form of panels, slabs, etc, i.e., bodies considered to be flat by the persons skilled in the art.

A widespread use of these flat agglomerates is for their placement in kitchen counters, bathroom counters and work surfaces in general, given that they have a high scratch resistance, low water absorption and good chemical resistance, in addition to the large aesthetic variety which can be achieved in them. Furthermore, agglomerates of this type are also commonly used in covering floors and walls, their use being limited to indoor use. Furthermore, the state of the art comprises the international PCT application WO 2006/100321, belonging to Cosentino S.A., which describes the manufacture of elements of this type with special resins allowing the use thereof in outdoor environments.

An example of these stone agglomerates can be found on the market with the name "Bretonstone", manufactured by means of the process belonging to the company Breton S.p.A. (Italy), in which the manufacture of the agglomerates, in the form of a panel or of a slab, starts from a mixture of aggregates with a known grain size and a polyester resin to which suitable additives have been incorporated. Particularly, once the manufacturing mass is perfectly homogenized, it is directly arranged on a belt, such that a carriage limits the perimeter for such mass to take the form of a panel. The amount of mass arranged is calculated according to the dimensions (surface area and thickness) of the panel which is to be manufactured.

Likewise, between the mass and the conveyor belt there is placed a separating element such as a paper, liquid silicone, elastomer or plastic, for example any protective plastic preventing the mass from adhering to the belt during the pressing would be valid. Additionally, a layer of any conventional wax or demolding agent which facilitates the demolding even more, silicone type demolding agents, for example, can be added on this separating element. Once the mass to be pressed is arranged on the belt, another separating element identical to the previous one is placed on the mass for the same purpose. The mass then passes to the pressing step; in it, the press is provided with a frame integral with the element exerting the pressure with the same measurements as the panel, to prevent the mass from extending and increasing in surface area during the pressing.

Another example of these flat articles can be found in international patent application WO2006/079585, wherein a method for manufacturing articles in the form of slabs or blocks with the use of the vacuum vibro-compression technique is described. The binder used is an aqueous dispersion of a acrylic polymer in the form of doplets, and a filler, a part of which consists on a hydraulic binder in a sufficient quantity to fix the water present in the aqueous dispersion.

However, given the proliferation of materials of this type as kitchen and bathroom counters, and due to the fact that the chromatic range which can be reached in these agglomerates is very broad, the need has arisen to make kitchen sinks, bathroom washbowls, other kitchen or bathroom items or any other non-flat product with this same material, for the purpose of preventing an aesthetic rupture from occurring between the sink or washbowl and the counter, i.e., an aesthetically very attractive and harmonized effect is sought.

Up until now, only a slight curvature has been provided to the panels or slabs manufactured from non-flat stone agglomerates, as described in international patent application PCT/EP2006/050470, which describes the preparation of a Bretonstone type traditional composition which, after performing the pressing by vacuum vibrocompression, is placed on a curved mold (with a limited radius) so that the panel acquires said curvature. The resin is then hardened to obtain the end object.

In this case, the radius of curvature is obviously limited to the pressed material not breaking or cracking in the mold, since the resin has still not hardened. Consequently, the technique described in this document cannot be applied in the manufacture of three-dimensional objects such as sinks, in which there are horizontal, vertical and curved surfaces, and considering the fact that the three-dimensional object can have a size up to 10 times larger than a traditional panel which has a thickness of 3 cm.

For the previous reasons, up until now the only alternative, which is laborious, for manufacturing said non-flat products was to adhere pieces previously cut to size obtained from said agglomerate in the form of a panel or of a slab. Subsequently, when the pieces are joined, the product is edge-planed and polished, as described in Spanish patent application 2 257 912 of Artemármol Chiclana (Spain).

In this sense, it is suitable to emphasize that the fact of machining the cut pieces of the sink and then joining them has certain drawbacks, for example, the effects of the adhesion in the joints are detected with the naked eye despite using colored putties or adhesives; furthermore, given that the sink or washbowl will continuously be subjected to contact with water, said joints are gradually deteriorated, color changes being observed therein.

Another option for manufacturing products with curved surfaces made of artificial stone is by means of injecting a mass into a mold. However, this technique requires, in the mass, a very high resin content (between 15-40% by weight of the total mass) so that the mass flows through the mold, since with the usual concentrations of resin in Bretonstone type formulations (6-13%) the mass does not flow and it is not possible to fill a mold either by pouring or by injection removing the occluded air. In addition to directly affecting the cost of the process, this increase in the resin content to achieve the suitable fluidity of the mass prevents performing chromatic effects such as two colors or three colors (introduction of several previously mixed masses with a different color, ES 2187313), since the excess of resin introduced to increase the fluidity of the mass entrains and mixes the colors, obtaining, instead of a mass with two or more differentiated colors, a mass of a single color "C" (which is the mixture of A+B) and not a element of two differentiated colors A and B.

For the same reasons described, materials with a veined effect, such as those described in the text of the international PCT application WO2006/134179, belonging to Cosentino S.A., cannot be obtained either, due to the fact that the dyes with which the vein effect is achieved are completely diluted in the polymer used as a binder and the effect disappears, diffuse areas with a different color appearing.

Another drawback of this method is that grain sizes greater than 2.5 mm cannot be used either because, in addition to the injection being rather difficult due to the increase of the mean size of the particles and the increase of the viscosity, due to the high percentage of resin, there is a decanting during the pressing, the method being limited to single colors with a fine grain (generally less than 2 mm).

### Description of the Invention

The object of the present invention is to provide a method which allows obtaining agglomerated stone products by means of vacuum vibrocompression.

Said object is achieved by means of a method in which, as an initial step, a mold which is open at the top and which has an inner surface is provided; the inner surface of the mold is subsequently covered with a material preventing the direct contact of the manufacturing mass with the mold, such as a demolding agent. Then, a molding mass consisting of particles of at least an aggregate and an organic binder is discharged into the mold.

The mold is subsequently subjected to vacuum for the purpose of extracting the occluded air in the mass; pressure and vibration are then applied to the mass to continue extracting the air and compacting the mass, which is then left to cure in order to harden the mass and, finally, the formed product is extracted.

In a preferred embodiment, the inner surface of the mold defines the shape of the non-flat product to be obtained and the mold is configured such that the product is shaped in a reverse manner inside the mold.

In another embodiment, the method additionally comprises the step of calibrating and polishing the obtained product after it is extracted.

The mold additionally comprises a rigid inner sleeve which is placed and adjusted inside the mold; and on which the demolding agent is placed. The advantage of this embodiment is that once the vibrocompression has been performed, the sleeve is extracted from the mold to cure the mass inside it, the mold is thus free to be used again in obtaining another product.

The summary of the method for manufacturing non-flat agglomerated stone products comprises:
- providing a mold which is open at the top and which has an inner surface;
- covering the inner surface of the mold with a material preventing the direct contact of the manufacturing mass with the mold;
- discharging a molding mass consisting of particles of at least an aggregate and an organic binder into the mold;
- subjecting the mold to vacuum for the purpose of extracting the occluded air in the mass;
- applying pressure and vibration to the mass to continue extracting the air and compacting the mass;
- inducing the polymerization of the assembly; and,
- extracting the formed product.

The non-flat agglomerated stone product obtained by that method is also an object of the invention, this product being able to be a kitchen or bathroom item or piece of furniture, including sinks, washbowls, shower trays, bathtubs or counters.

These products are suitable for indoor use or outdoor use, for which resins resistant to ultraviolet radiation, capable of withstanding the inclemency of the weather as well as the highest temperature variations when these products are placed outdoors should be chosen.

### Brief Description of the Drawings

To complement the description which is being made and for the purpose of aiding to better understand the features of the invention according to preferred practical embodiments thereof, the following is attached as an integral part of this description:
Figure 1 is a block diagram showing the sequence of a preferred embodiment of the method of the present invention.
Figure 2 is a cross-sectional view of a mold used in a preferred embodiment of the present invention, in which the mold is empty.
Figure 3 depicts the mold of Figure 2 with the molding mass inside it.
Figure 4 is a cross-sectional view of a mold used in an additional embodiment of the present invention in which the mold is empty.

### Detailed Description of the Preferred Embodiments of the Invention

As described in the background section, up until now the vacuum vibrocompression method has only been useful for obtaining slabs and panels which are considered as flat products within the art and which are generally not more than 3 cm thick. Up until the present invention, it was considered that these principles were not applicable to non-flat products, such as sinks, which can be up to 40 cm high, i.e., more than 10 times the usual size of a panel or slab which usually do not exceed 3 cm, and which can have vertical walls, which is geometrically different from a panel with a horizontal surface.

The method of the present invention involves a significant change of concept and that change relates directly to the use of a mold in a vacuum vibrocompression machine which is resized to accept said mold, and performing therein and in the molding mass the vacuum, compression and vibration operations.

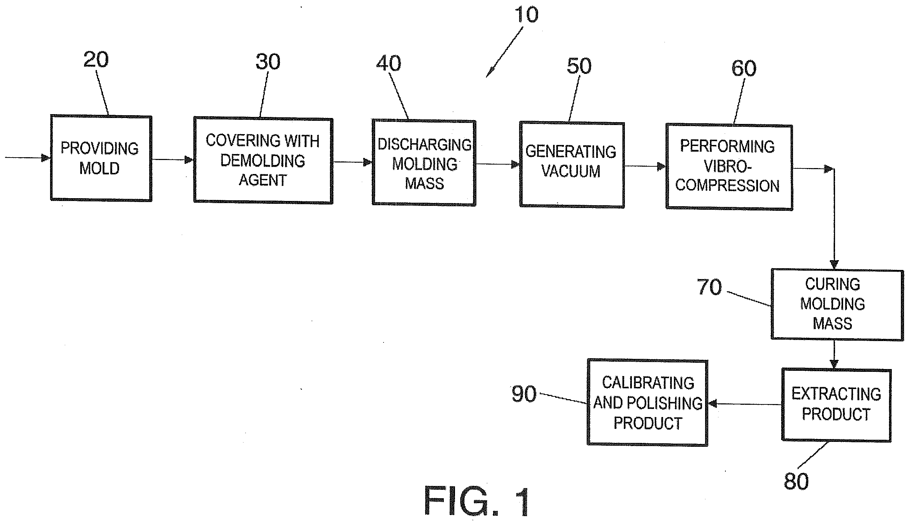

An embodiment of the method of the present invention can be explained from Figure 1, in which the method 10 starts with step 20 in which a mold which is open at the top and which has an inner surface is provided. Then, in step 30 the inner surface of the mold is covered with a demolding agent. Subsequently, in step 40 a molding mass consisting of particles of at least a stone aggregate and an organic binder is discharged into the mold, the demolding agent prevents the mass from adhering to the mold and obviously facilitates demolding the obtained product.

Continuing with Figure 1, after the mass has been discharged into the mold, step 50 is performed, in which the mold is subjected to vacuum for the purpose of extracting the occluded air in the molding mass; in this sense, the vibrocompression machines include a vacuum chamber, said chamber is sized so that the mold with the molding mass can be introduced therein.

Then, once the mold is inside the press and the required vacuum level, generally of the order of 1-20 mmHg, has been reached, the vibrocompression step 60 starts, said vacuum level being maintained simultaneously. The vibration and the compression must be transmitted to the entire molding mass to assure that the non-flat product is perfectly shaped and without porosity.

In relation to the mold, it can be constructed in any rigid material withstanding the mechanical stress involved in the vibrocompression step 60 which is performed in the order of 2 to 10 bar and with a vibration frequency of 2000 to 3500 rpm.

After applying this vibrocompression, the mold is extracted from the chamber, and the mass is left to cure in step 70, the curing time depends on the resin used, but it generally has a time of 1 to 5 hours. It is even possible to perform a much slower polymerization process by adjusting the catalysis system, such that process takes place for 3 or 4 days. Finally, after the polymerization step, the formed product is extracted from the mold in step 80.

In the embodiment which is described, an additional step which is indicated with reference number 90 is carried out, in which the product is calibrated and polished in all its inner faces, such that the material is provided with the desired end finish. This involves another substantial difference with the elements described in the state of the art, since the elements manufactured by means of injection are not polished, whereas the proposed elements are calibrated and polished, as occurs in flat parts.

In relation to the manufacturing mass used for the molding, using a conventional manufacturing mass, already described in the prior art, is preferred because the aesthetic characteristics desired in the product to be obtained must be exactly the same as those obtained in the pressed material in the form of a panel or slab. In said mass, a polyester, vinyl ester, polyurethane, epoxy or acrylic resin with a content of the order of 6 to 15% by weight in the molding mass is used, which is added in a mixture of different types of ground aggregates with known grain sizes and contents, such as quartz, cristobalite, siliceous sands, feldspar, granite, glass, ferrosilicon, metallic silica, mirror or other types of aggregates also described in the state of the art. Furthermore, pigments or coloring agents are also usually included so that the parts acquire the desired color.

The different grain sizes and contents of each of these aggregates depend on the end aesthetic appearance desired. Preferred grain sizes comprise a micronized material, with a mean particle size between 2 and 60 µm and ground materials the mean particle size of which is comprised between 0.065 mm and 8 mm. These aggregates can be of a different color, using at least two aggregates of a different color, and as a result of the method, colors, and not a single mixed color as in the prior art, can be differentiated in the end product. The aggregates used mixed with the resin and the pigments or coloring agents required can form manufacturing masses of different colors, and as a result of the method, these masses can be mixed without their colors being mixed, therefore different colors and not a single mixed color can be differentiated in the end product.

In order to harden the resin, suitable additives must be incorporated in the latter for which a catalyst and an accelerator, in addition to other additional additives such as coupling agents, coloring agents and pigments, antimicrobial additives and ultraviolet filters, among others, are used.

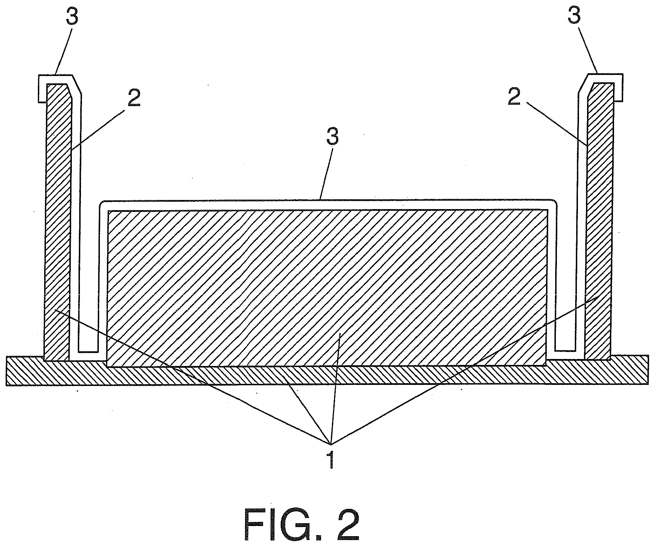

It is now suitable to refer to Figure 2, which shows a sectional view of an occupied mold 1 in the method of the present invention, the mold has an inner surface 2 and is configured such that the product to be obtained is shaped in a reverse manner inside the mold 1. The inner surface 2 of the mold 1 is covered with a demolding agent, which in the described embodiment is a polymeric film 3.

Likewise, the demolding agent can be made of elastomeric materials, polymeric materials or of paper, or a liquid demolding agent; all of them prevent the direct contact of the manufacturing mass with the mold, which facilitates the extraction of the product. Furthermore, it is essential to prevent manufacturing mass from being introduced between the joints between walls of the metallic mold during the pressing step, because if the latter harden they make it impossible to be able to extract the product from the mold, hence the importance of the demolding film being perfectly adjusted to the mold, the film is preferably made of a single part having no internal joints. Of course, this does not limit the invention and only intends to illustrate a preferred mode of manufacture.

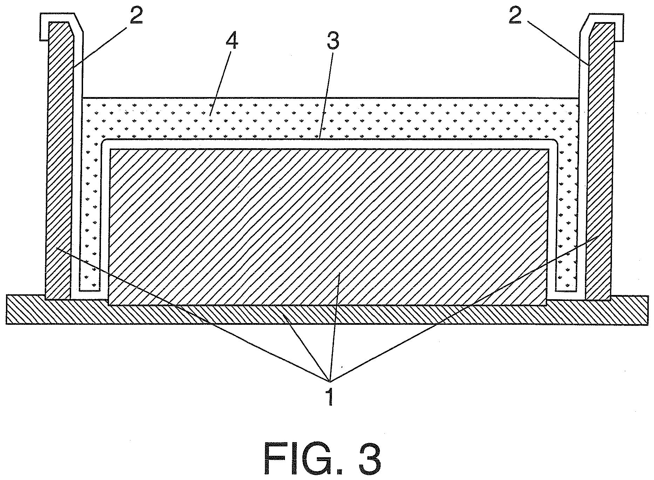

Figure 3 shows the mold 1 with the molding mass inside it, in which the film 3 prevents the mass 4 from touching the inner surface 2 of the mold 1. In this embodiment, once the mass has been subjected to vacuum and the vibrocompression on the mass has been performed, such mass is cured inside the mold, the curing is performed inside an oven, and the formed product is then extracted from the mold.

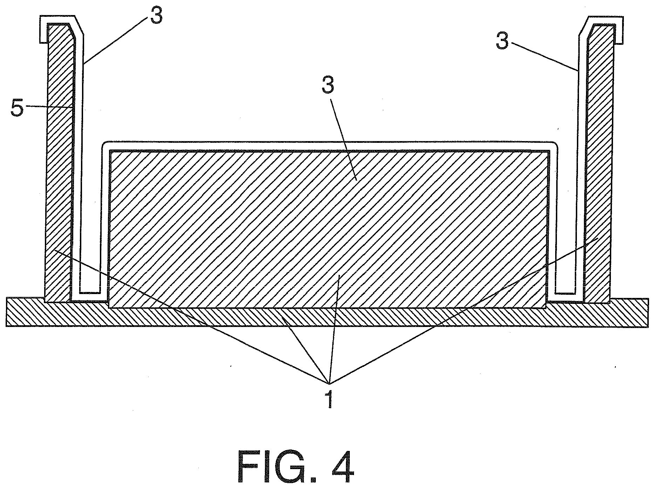

In Figure 4, the mold 1 comprises an inner sleeve 5 which is adjusted inside the mold and on which the film 3 is applied. The sleeve 5 is manufactured from a completely rigid material (steel, aluminium, duralumin, plastic, wood, etc), preferably carbon steel, but it can be made with the same materials with which the mold is made. In this embodiment, when vibration and compression have already been applied on the molding mass, the inner sleeve which still has the uncured mass, is removed from the mold. The inner sleeve 5 is then introduced in the oven to cure the mass.

This embodiment of the method allows recovering the mold for a new pressing due to the fact that when the mass is cured directly in the mold, the latter cannot be recovered until after 2 or 3 hours necessary for hardening the mass.

Two other main advantages of this embodiment are, on one hand the cost saving in molds, since the production capacity increases without having to invest in molds and, on the other hand, a short firing time in the oven, since when the sleeve 5 is removed from the mold, the heat transmission is much quicker and does not occupy as much volume as when the curing is performed inside the mold 1.

The products obtained by means of the method are preferably bathroom or kitchen items or pieces of furniture, such as sinks, washbowls, shower trays, counters, etc.

According to the described method, an example thereof, which does not limit the present invention, is illustrated below.

### Example:

A conventional manufacturing mass with the following composition is formulated.
Orthophthalic polyester resin: 7%.
Micronized silica sand: 24%.
Quartz (0.1-0.4 mm): 11 %.
Silica sand (0.6-1.2 mm): 14 %.
Ground mirror (0.1-0.6 mm): 12 %.
Ground glass (0.6-1.2 mm): 9 %.
Ground mirror (1.2-2 mm): 23 %.
White pigment: 8% (over the resin content).

Suitable additives must be incorporated to the mentioned resin in order to induce the polymerization process, for which a catalyst, an accelerator and additionally a coupling agent, ultraviolet filters or antimicrobial agents are added to it.

Once the material has been correctly homogenized, it is poured onto the mold, the entire free volume thereof being covered. The assembly is then introduced in the vacuum chamber of the press, the latter is lowered to close the volume in which the vacuum is to be made, and the pump is operated, allowing 3 minutes to elapse until the desired vacuum is reached, in this case 4 mmHg. The material is then subjected to vibrocompression, such that a pressure of 7 bar and a vibration of 3400 rpm are applied for 4 minutes. After this time, the chamber of the press is opened and the mold is extracted, which mold is taken to the oven, in which it is subjected to a temperature of 90°C for 2 hours. Finally, the hardened element is calibrated and polished.

## Claims

1. Method for manufacturing non-flat agglomerated stone products, comprising:
- providing a mold (1) which is open at the top and which has an inner surface (20);
- covering the inner surface (2) of the mold (1) with a material preventing the direct contact of the manufacturing mass (4) with the mold (30);
- discharging the manufacturing mass consisting of particles of at least an aggregate and an organic binder into the mold (40);
- subjecting the mold to vacuum for the purpose of extracting the occluded air in the mass, *wherein the* vacuum is 133 to 2.666 Pa (1 to 20 mm Hg) (50);
- applying a pressure comprised between 2·10⁵-10⁶ Pa (2-10 bar) and vibration comprised between 2000-3500 rpm to the mass to continue extracting the air and compacting the mass (60);
- inducing the polymerization of the mass, wherein the polymerization has a time of 1-5 hours (70) and
- extracting the formed product (80),
**characterized in that** the mold additionally comprises a rigid inner sleeve (5), which is placed and adjusted inside the mold (1) and on which the material preventing the direct contact of the manufacturing mass (4) is applied.

2. Method for manufacturing non-flat agglomerated stone products according to claim 1, **characterized in that** the inner surface (2) of the mold (1) defines the shape of the non-flat product to be obtained and wherein the mold is configured such that the product is shaped in a reverse manner inside the mold.

3. Method for manufacturing non-flat agglomerated stone products according to claim 1 or 2, additionally comprising the step of calibrating and polishing the obtained product after is extracted (90).

4. Method for manufacturing non-flat agglomerated stone products according to any of claims 1 to 3, **characterized in that** the material preventing the direct contact of the manufacturing mass (4) with the mold (1) is a demolding agent in the form of a film.

5. Method for manufacturing non-flat agglomerated stone products according to claim 4, **characterized in that** the demolding agent is a film (3).

6. Method for manufacturing non-flat agglomerated stone products according to any of claims 4 or 5, wherein the film (3) is manufactured from a material which is selected from the group comprising elastomers, polymers or paper.

7. Method for manufacturing non-flat agglomerated stone products according to claim 5, **characterized in that** the inner sleeve (5) is manufactured from wood, metal or stone.

8. Method for manufacturing non-flat agglomerated stone products according to any of claims 1 to 7, **characterized in that** the manufacturing mass (4) has an organic binder content of 6 to 15%.

9. Method for manufacturing non-flat agglomerated stone products according to any of claims 1 to 8 **characterized in that** the organic binder is a polyester, epoxy, polyurethane, vinyl ester resin or an acrylic resin.

10. Method for manufacturing non-flat agglomerated stone products according to any of claims 1 to 9, wherein the composition comprises at least two manufacturing masses of a different color.

11. Method for manufacturing non-flat agglomerated stone products according to any of claims 1 to 9, wherein the mold (1) is manufactured from wood, metal or stone.

12. Method for manufacturing non-flat agglomerated stone products according to any of claims 1 to 11 **characterized in that** the formed product is a kitchen or bathroom item or piece of furniture, suitable for indoor or outdoor use.

13. Method for manufacturing non-flat agglomerated stone products according to claim 12, **characterized in that** the resin used must be resistant to ultraviolet radiation, as well as to the inclemency of the weather and thermal variations used when the product must have an outdoor use.

14. Method for manufacturing non-flat agglomerated stone products according to claim 12, wherein the bathroom or kitchen item or piece of furniture is a sink, a washbowl, a shower tray, bathtub or a counter.

## Patentansprüche

1. Verfahren zur Herstellung von nicht flachen agglomerierten Steinprodukten, das Folgendes umfasst:
- Bereitstellen einer Form (1), die an der Oberseite offen ist und die eine innere Oberfläche (20) aufweist;
- Bedecken der inneren Oberfläche (20) der Form (1) mit einem Material, das den direkten Kontakt der Herstellungsmasse (4) mit der Form verhindert (30);
- Einbringen der aus Partikeln aus mindestens einem Mineralstoffgemisch und einem organischen Bindemittel bestehenden Herstellungsmasse in die Form (40);
- Anlegen eines Vakuums an die Form zum Zwecke des Entfernens der in der Masse eingeschlossenen Luft, wobei das Vakuum 133 bis 2660 Pa (1 bis 20 mmHg) beträgt (50);
- Beaufschlagen der Masse mit einem Druck, der zwischen 2·10⁵·10⁶ Pa (2-10 bar) liegt, und einer Vibration, die zwischen 2000-3500 rpm liegt, um das Entfernen der Luft weiterzuführen und die Masse zu verdichten (60);
- Induzieren einer Polymerisation der Masse, wobei die Polymerisation 1 bis 5 Stunden lang dauert (70) und
- Entfernen des geformten Produkts (80),
**dadurch gekennzeichnet, dass** die Form zusätzlich eine starre innere Hülse (5) umfasst, die innerhalb der Form (1) angeordnet und angepasst ist, und auf die das Material zur Verhinderung des direkten Kontakts der Herstellungsmasse (4) aufgetragen wird.

2. Verfahren zur Herstellung von nicht flachen agglomerierten Steinprodukten nach Anspruch 1, **dadurch gekennzeichnet, dass** die innere Oberfläche (2) der Form (1) die Gestalt des nicht flachen Produkts, das erhalten werden soll, bestimmt, wobei die Form so gestaltet ist, dass das Produkt in einer inversen Art und Weise innerhalb der Form geformt wird.

3. Verfahren zur Herstellung von nicht flachen agglomerierten Steinprodukten nach Anspruch 1 oder 2, welches nach der Entfernung des Produkts zusätzlich den Schritt des Kalibrierens und Polierens des erhaltenen Produkts umfasst (90).

4. Verfahren zur Herstellung von nicht flachen agglomerierten Steinprodukten nach einem der Ansprüche 1 bis 3, **dadurch gekennzeichnet, dass** das Material, das den direkten Kontakt der Herstellungsmasse (4) mit der Form (1) verhindert, ein Entformungsmittel in Form eines dünnen Films ist.

5. Verfahren zur Herstellung von nicht flachen agglomerierten Steinprodukten nach Anspruch 4, **dadurch gekennzeichnet, dass** das Entformungsmittel ein dünner Film (3) ist.

6. Verfahren zur Herstellung von nicht flachen agglomerierten Steinprodukten nach einem der Ansprüche 4 oder 5, wobei der dünne Film (3) aus einem Material hergestellt ist, das aus der Gruppe der Elastomere, Polymere oder Papier ausgewählt ist.

7. Verfahren zur Herstellung von nicht flachen agglomerierten Steinprodukten nach Anspruch 5, **dadurch gekennzeichnet, dass** die innere Hülse (5) aus Holz, Metall oder Stein hergestellt ist.

8. Verfahren zur Herstellung von nicht flachen agglomerierten Steinprodukten nach einem der Ansprüche 1 bis 7, **dadurch gekennzeichnet, dass** die Herstellungsmasse (4) einen Gehalt von organischem Bindemittel von 6 bis 15% aufweist.

9. Verfahren zur Herstellung von nicht flachen agglomerierten Steinprodukten nach einem der Ansprüche 1 bis 8, **dadurch gekennzeichnet, dass** das organische Bindemittel ein Polyester, ein Epoxid, ein Polyurethan, ein Vinylesterharz oder ein Acrylharz ist.

10. Verfahren zur Herstellung von nicht flachen agglomerierten Steinprodukten nach einem der Ansprüche 1 bis 9, wobei die Zusammensetzung mindestens zwei Herstellungsmassen verschiedener Farben umfasst.

11. Verfahren zur Herstellung von nicht flachen agglomerierten Steinprodukten nach einem der Ansprüche 1 bis 9, wobei die Form (1) aus Holz, Metall oder Stein hergestellt ist.

12. Verfahren zur Herstellung von nicht flachen agglomerierten Steinprodukten nach einem der Ansprüche 1 bis 11, **dadurch gekennzeichnet, dass** das geformte Produkt ein Küchen- oder ein Badezimmergegenstand oder ein Möbelstück ist, das für den Innen- oder Außengebrauch geeignet ist.

13. Verfahren zur Herstellung von nicht flachen agglomerierten Steinprodukten nach Anspruch 12, **dadurch gekennzeichnet, dass** das verwendete Harz beständig gegenüber ultravioletter Strahlung, sowie gegenüber der Rauheit des Wetters und Temperaturveränderungen sein muss, wenn das Produkt einen Außengebrauch haben soll.

14. Verfahren zur Herstellung von nicht flachen agglomerierten Steinprodukten nach Anspruch 12, wobei der Bad- oder Küchengegenstand oder das Möbelstück ein Spülbecken, eine Waschschüssel, eine Duschwanne, eine Badewanne oder ein Tresen ist.

## Revendications

1. Méthode de fabrication de produits non plats en pierre agglomérée comprenant :
- la fourniture d'un moule (1) qui est ouvert sur le dessus et qui possède une surface interne (20) ;
- le recouvrement de la surface interne (20) du moule (1) par un matériau empêchant le contact direct de la masse de fabrication (4) avec le moule (30) ;
- le déchargement de la masse de fabrication consistant en des particules d'au moins un agrégat et d'un liant organique dans le moule (40) ;
- la soumission du moule au vide dans le but d'extraire l'air retenu dans la masse, dans laquelle le vide est de 133 à 2666 Pa (1 à 20 mm Hg) (50) ;
- l'application d'une pression comprise entre 2.10⁵-10⁶ Pa (2-10 bar) et d'une vibration comprise entre 2000-3500 rpm à la masse pour continuer à extraire l'air et compacter la masse (60) ;
- l'induction de la polymérisation de la masse, dans laquelle la polymérisation dure 1-5 heures (70) et
- l'extraction du produit formé (80),
**caractérisée en ce que** le moule comprend en outre un manchon rigide interne (5), qui est placé et ajusté à l'intérieur du moule (1) et sur lequel le matériau empêchant le contact direct de la masse de production (4) est appliqué.

2. Méthode de fabrication de produits non plats en pierre agglomérée selon la revendication 1, **caractérisée en ce que** la surface interne (2) du moule (1) définit la forme du produit non plat à obtenir et dans laquelle le moule est configuré de telle sorte que le produit est inversement mis en forme à l'intérieur du moule.

3. Méthode de fabrication de produits non plats en pierre agglomérée selon la revendication 1 ou 2, comprenant en outre une étape de calibration et de polissage du produit obtenu après extraction (90).

4. Méthode de fabrication de produits non plats en pierre agglomérée selon l'une des revendications 1 à 3, **caractérisée en ce que** le matériau empêchant le contact direct de la masse de fabrication (4) avec le moule (1) est un agent de démoulage sous la forme d'un film.

5. Méthode de fabrication de produits non plats en pierre agglomérée selon la revendication 4, **caractérisée en ce que** l'agent de démoulage est un film (3).

6. Méthode de fabrication de produits non plats en pierre agglomérée selon l'une des revendications 4 ou 5, dans laquelle le film (3) est fabriqué à partir d'un matériau choisi parmi le groupe comprenant des élastomères, des polymères ou du papier.

7. Méthode de fabrication de produits non plats en pierre agglomérée selon la revendication 5, **caractérisée en ce que** le manchon interne (5) est fabriqué à partir de bois, de métal ou de pierre.

8. Méthode de fabrication de produits non plats en pierre agglomérée selon l'une des revendications 1 à 7, **caractérisée en ce que** la masse de fabrication (4) a une teneur en liant organique de 6 à 15%.

9. Méthode de fabrication de produits non plats en pierre agglomérée selon l'une des revendications 1 à 8, **caractérisée en ce que** le liant organique est un polyester, un époxy, un polyuréthane, une résine en ester de vinyle ou une résine acrylique.

10. Méthode de fabrication de produits non plats en pierre agglomérée selon l'une des revendications 1 à 9, dans laquelle la composition comprend au moins deux masses de fabrication de couleurs différentes.

11. Méthode de fabrication de produits non plats en pierre agglomérée selon l'une des revendications 1 à 10, dans laquelle le moule (1) est fabriqué à partir de bois, de métal ou de pierre.

12. Méthode de fabrication de produits non plats en pierre agglomérée selon l'une des revendications 1 à 11, **caractérisée en ce que** le produit formé est un élément de cuisine ou de salle de bains ou un meuble adapté à un usage intérieur ou extérieur.

13. Méthode de fabrication de produits non plats en pierre agglomérée selon la revendication 12, **caractérisée en ce que** la résine utilisée doit être résistante aux radiations d'ultraviolet aussi bien qu'au mauvais temps et aux variations de température lorsque le produit doit être utilisé en extérieur.

14. Méthode de fabrication de produits non plats en pierre agglomérée selon la revendication 12, dans laquelle l'élément de cuisine ou de salle de bains ou le meuble est un évier, un lavabo, un bac de douche, une baignoire ou un comptoir.
